# EUROPEAN PATENT APPLICATION

(11) **EP 1 355 442 A1**
(43) Date of publication of application: **22.10.2003**
(21) Application number: 02290875.0
(22) Date of filing: 08.04.2002
(51) Int. Cl.: H04L 1/16, H04L 1/18, H04Q 7/38

(54) **Uplink signalling in HSDPA**

(71) Applicant: Mitsubishi Electric Information Technology Centre Europe B.V., 1119 NS Schiphol Rijk (NL)
(72) Inventor: Fukui, Noriyuki, Mitsubishi Electricite, 35700 Rennes (FR)
(74) Representative: Maillet, Alain

(57) **Abstract**

The invention concerns a reception method for receiving sequences of sub-frames assigned to different users and transmitted by a transmitter over a plurality of channels (HS-SCCHs), each channel being shared among said users, said shared channels being time divided into intervals of transmission (TTIs), each sub-frame being transmitted in a TTI. When a sub-frame received by a user from a shared channel (HS-SCCH) is detected as erroneous, a negative acknowledgement (NACK) is sent back to the transmitter if the previous sub-frame on said shared channel was found not erroneous and no acknowledgement information is sent back to the transmitter if said previous sub-frame was detected as erroneous.

## Description

The present invention relates to a method for receving sequences of sub-frames over a plurality of channels shared among different users. The invention can be applied to a telecommunication system supporting HSDPA.

It has been recently proposed within the framework of the 3GPP forum to enhance the Universal Mobile Telecommunication System (UMTS) with a High Speed Downlink Packet Access (HSDPA). This new fonctionnality is aimed at enabling a fast access to packet services through a new transport channel called HS-DSCH for High Speed-Downlink Shared Channel. The physical channels to which the HS-DSCH is mapped, also called HS-PDSCHs (for High Speed Physical Downlink Shared Channels) can be shared by users in the time domain as well as in the code domain. According to his needs, a user is allocated one or more channelisation codes (or spreading codes) within the HS-DSCH. In addition, the HS-DSCH is expected to accomodate different rates and channel conditions by supporting Adaptive Modulation and Coding schemes (AMC) as well as Hybrid ARQ.

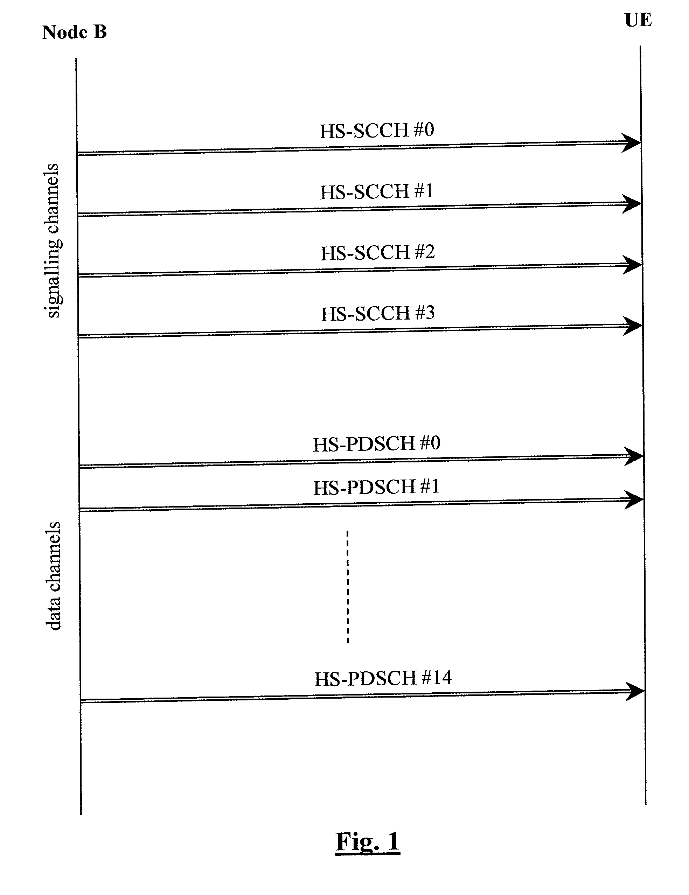

Fig. 1 represents schematically the physical stucture of a high speed downlink shared transport channel for HSDPA. The shared channel basically consists of 15 HS-PDSCH channels which are intended for the transmission of data to the different user equipments (UEs) and of 4 HS-SCCH channels which carry the associated signalling. The data sub-frames for the differents UEs can be code- and time-multiplexed over the HS-PDSCH channels. More specifically, in a given TTI (Transmission Time Interval) the HS-PDSCH channels can simultaneously accomodate one to fifteen users. A more complete description of the shared channels in HSDPA can be found in the specification 3GPP TR 25.858 available from the website www.3gpp.org.

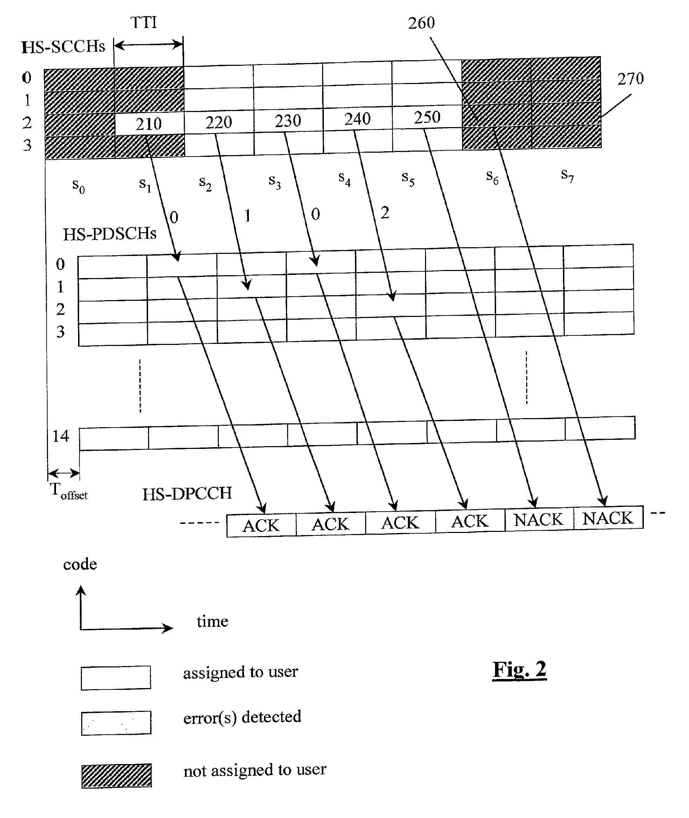

Fig. 2 shows the process of receiving data from a HS-DSCH channel. The HS-SCCH channels numbered 0 to 3 have been represented in the upper part of the figure and the HS-PDSCH channels numbered 0 to 14 have been represented below, delayed with a fixed time offset T_{offset}. The HS-SCCH channels are subjected to an identical time division: they are divided into TTIs denoted s₀, s₁,... as represented, each HS-SCCH channel carrying a sub-frame for one user during one TTI. Similarly, the HS-PDSCH channels are subjected to a TTI time division. A sub-frame on a HS-SCCH channel will be referred to as a signalling sub-frame and a sub-frame on a HS-PDSCH channel will be referred to as a data sub-frame. In a first state, referred to as monitoring state, the UE receives all four HS-SCCH channels (see e.g. TTI s₀) since it does not know whether a signalling sub-frame is assigned to the user on one of the HS-SCCH channels. Once the UE has detected a signalling sub-frame assigned to the user on one of the HS-SCCH channels (e.g. in TTI s₁ on HS-SCCH #2) it enters a second state, hereafter referred to as single channel receiving state, where it stops receiving the other HS-SCCH channels. For example, in TTI s₂, the UE keeps receiving HS-SCCH #2 but stops receiving the other channels. The UE then determines the channelization code(s) from the assigned signalling sub-frame i.e. determines over which HS-PDSCH channel(s) the data are transmitted and which transmission parameters are used therefor. For example, the signalling information detected in 210 to 240 and decoded by the UE gives the code numbers 0, 1, 0, 2 respectively. Knowing the transmission parameters, the UE can then retrieve the data from HS-PDSCH #0, HS-PDSCH #1, HS-PDSCH #0, HS-PDSCH #2, successively. Although in the illustrated case, only one HS-PDSCH channel per sub-frame is allocated, it is should be noted that, in general, a plurality (up to 15) of such channels can be allocated to a given user.

In the monitoring state, the UE determines whether a signalling sub-frame is assigned to the user by de-scrambling the sub-frame with its UE ID (UE IDentifier) and calculating a CRC as described in more details futher below. If an error is detected by the CRC, the UE sends back over the uplink channel HS-DPCCH (High Speed Dedicated Physical Common Channel) a negative acknowledgement NACK indicating an error. Conversely, if no error is detected by the CRC, the UE checks whether the user data on the allocated HS-PDSCH(s) are erroneous. If they are not, an acknowledgement indication ACK is transmitted over the HS-DPCCH, else a negative acknowledgement NACK is transmitted as mentioned before.

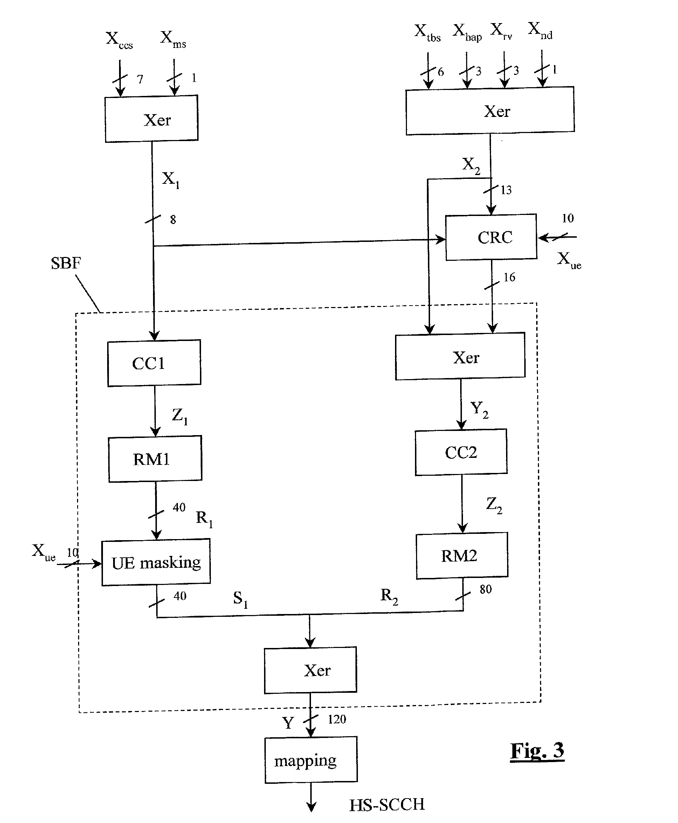

Fig. 3 shows how a signalling sub-frame for a user is generated on a HS-SCCH channel. A signalling sub-frame contains, in encoded form, the following information, referred to as user specific signalling information X, comprising:
X_{ccs} which indicates the channelization code set information i.e. the HS-PDSCH(s) allocation;
Xₘₛ which gives the modulation scheme (QPSK or 16-QAM);
X_{tbs} which gives the transport block size;
Xₕₐₚ which indicates the channel process number of Hybrid-ARQ;
Xᵣᵥ which gives the redundancy and constellation version;
X_{nd} indicates whether the current transmission is a first transmission or a retransmission;
Xᵤₑ represents the UE ID, i.e. identifies the UE .

While X_{ccs} and Xₘₛ are multiplexed to give a first composite signalling information X₁, X_{tbs}, Xₕₐₚ, Xᵣᵥ and X_{nd} are multiplexed (or concatenated) to give a second composite signalling information X₂. The first composite signalling information X₁ is then subjected to a first channel coding CC₁ to output a first channel encoded composite information Z₁ and then to rate matching in RM₁. The rate matched ouptut of RM₁, denoted R₁, matched to 40 bits, is then masked in a UE specific way by using the UE identifier Xᵤₑ to produce a UE masked output S₁. A CRC code is calculated on the basis of the first composite signalling information X₁, the second composite signalling information X₂ and the UE identifier Xᵤₑ. The CRC code is then attached to the second composite signalling information and the concatenated result is encoded by a second channel coding CC₂ before being subjected to rate matching in RM₂, denoted R₂, matched to 80 bits. R₂ is then multiplexed (or concatenated) with the UE masked output S₁ to produce a channel encoded and rate matched signalling information Y over 120 bits which is mapped onto a sub-frame of an HS-SCCH channel.

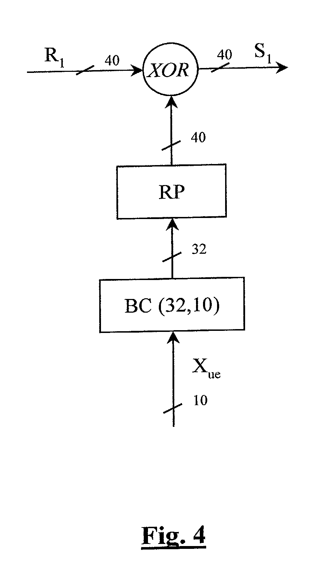

Fig. 4 describes in more details the UE masking module represented in Fig. 3. The UE identifier Xᵤₑ, coded over 10 bits, is subjected to a (32,10) block error coding. The first 8 bits of the coded identifier are repeated and appended to the latter in the module denoted RP. The rate matched output R₁ is then *XOR*ed with the output of RP to output a UE masked output S₁.

Returning to Fig. 2, when a transmission for a given user ceases, that is, in case of a change of assignment, the UE detects an error on the HS-SCCH channel it is receiving. It is assumed in Fig. 2 that the transmission for the user in question has ended at s₄ and that sub-frame 250 is allocated to another user. The sub-frame 250 is detected as erroneous since the UE identifier Xᵤₑ encoded therein is not the identifier of the user. A negative acknowledgement NACK is transmitted over the HS-DPCCH channel accordingly. However, at this stage the UE cannot know whether the error is due to a defective transmission or a change of assignment. The UE returns to the monitoring state at the next TTI (here at s₆) and checks whether a sub-frame is assigned to the user on one of HS-SSCH channels. In the case illustrated, a change of assignment has occurred in TTI s₅ and the sub-frames transmitted in TTI s₆ and TTI s₇ are also assigned to other users. These sub-frames are therefore detected as erroneous and the UE sends negative acknowledgements NACKs over the HS-DPCCH uplink channel accordingly. More generally, each user for which a sub-frame is not assigned to in a given TTI sends back a negative acknowledgement to the node B on its dedicated HS-DPCCH channel. This results in a heavy signalling traffic on the HS-DPCCHs channels.

An object of the invention is to reduce the signalling traffic in a telecommunication system having an HSDPA functionnality and more particularly to reduce the uplink signalling traffic on the HS-DPCCH channels.

The above mentionned object is attained by the method for receiving sequences of sub-frames over a plurality of shared channels as defined in claim 1.

The characteristics of the invention mentioned above, as well as others, will emerge more clearly from a reading of the following description in relation to the accompanying figures, amongst which:
Fig. 1 depicts schematically the physical structure of a downlink shared channel for HSDPA;
Fig. 2 depicts schematically a known process for receiving sub-frames from a plurality of shared channels;
Fig. 3 depicts schematically a known process for generating a signalling sub-frame on an HS-SCCH channel;
Fig. 4 depicts schematically an operation involved in the sub-frame generating process of Fig. 3;
Figs. 5A and 5B depicts schematically a process according to the invention for receiving sub-frames from a plurality of shared channels.

We refer back to the context of a telecommunication system, e.g. a UMTS system having a HSDPA functionality. Sequences of sub-frames assigned to different users are transmitted over a plurality of shared channels. The data sub-frames are transmitted over HS-PDSCHs #0 to #14 while the associated signalling sub-frames are transmitted over HS-SCCHs #0 to #3.

It is assumed that the UE has detected a sequence of sub-frames 510,..,540 assigned to the user on the channel HS-SCCH #2 and that sub-frame 550, after having been de-scrambled with the UE ID and CRC checked, is found erroneous. A negative acknowledgement NACK is sent back on the HS-DPCCH channel as in the prior art.

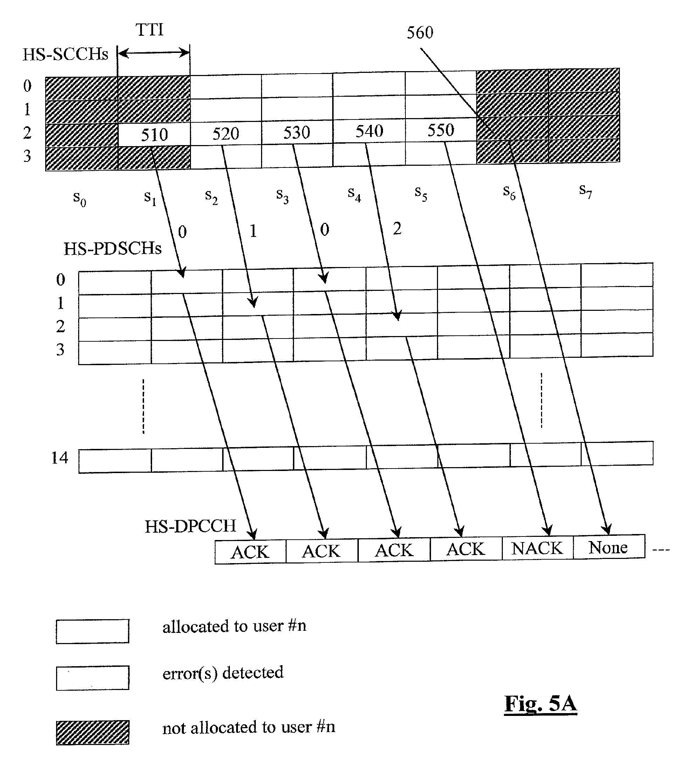

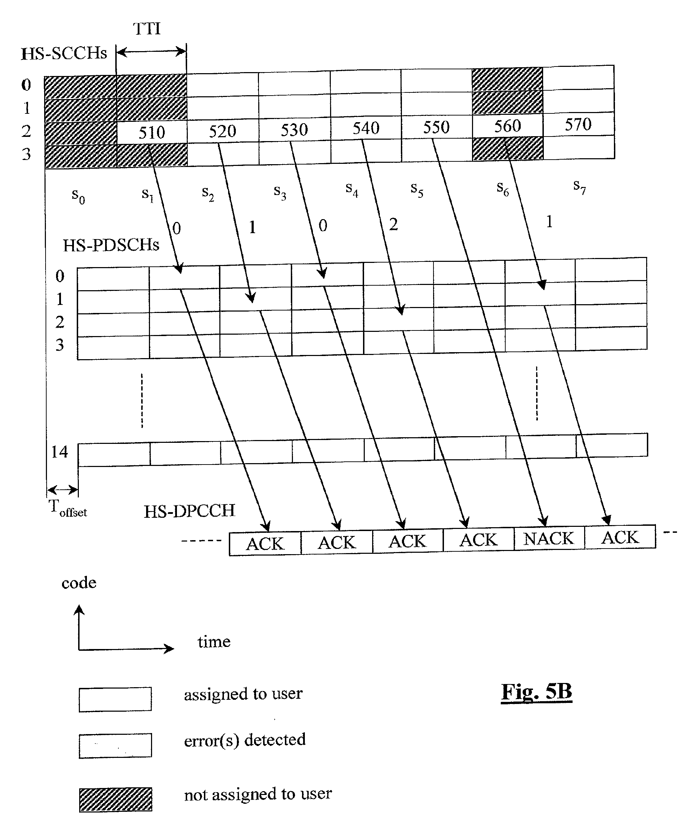

Since the UE is unable to know whether the error affecting 550 is due a detective transmission or a change of assignment, it returns to the monitoring state at TTI s₆. Two cases should be distinguished, which are respectively illustrated in Figs. 5A and 5B.

In Fig. 5A, all the sub-frames transmitted at TTI s₆ over the plurality of the HS-SCCH channels are found erroneous, in particular sub-frame 560 transmitted next on the HS-SCCH channel #2 . In this instance, no acknowledgement information is sent back to the node B, i.e. a NACK is not transmitted on HS-DPCCH.

More generally, when a first erroneous sub-frame has been detected and a first NACK transmitted accordingly, no further acknowledgement information is sent back to the node B if the next and subsequent sub-frames are found erroneous. In other words, when the UE finds that a received sub-frame is erroneous, no acknowledgement information is sent back to the node B if said previous sub-frame was also found erroneous.

Viewed from the node B side, the absence of feedback information can be either attributed to the end of a sequence or to a disrupted transmission. By counting the number of subframes transmitted to a user and comparing it with the number of ACKs/ NACKs received on the HS-DPCCH channel, the node B can remove this ambiguity and determine whether the end of the sequence has been reached.

In Fig. 5B, among the sub-frames transmitted at TTI s₆ over the plurality of the HS-SCCH channels, sub-frame 560 occurring next on the HS-SCCH channel #2 is found error-free. A positive acknowledgement information ACK is sent back on the HS-DPCCH provided the data sub-frame(s) from the HS-PDSCH channel(s) is(are) not erroneous, else, a negative acknowledgement NACK is sent back on HS-DPCCH. In any case, the UE returns to the single channel receiving state at TTI s₇. At the node B side, the succession of a NACK (e.g. negative acknowledgement of sub-frame 550) and an ACK (e.g. positive acknowledgement of sub-frame 560) is not interpreted as an acknowledgement of an end of sequence but as a transmission error. This however implies that a gap of one TTI has to be provided at the transmitting side between consecutive assignments to the same user.

## Claims

1. Reception method for receiving sequences of sub-frames assigned to different users and transmitted by a transmitter over a plurality of channels (HS-SCCHs), each channel being shared among said users, said shared channels being time divided into intervals of transmission (TTIs), each sub-frame being transmitted in a TTI, **characterised in that**, when a sub-frame received by a user from a shared channel (HS-SCCH) is detected as erroneous, a negative acknowledgement (NACK) is sent back to the transmitter if the previous sub-frame on said shared channel was found not erroneous and no acknowledgement information is sent back to the transmitter if said previous sub-frame was detected as erroneous.

2. Reception method according to claim 1, **characterised in that** a sub-frame received by a user is de-scrambled with a user identifying code (UE-ID) and subjected to a CRC check for determining whether said sub-frame is erroneous or not.

3. Reception method according claim 1 or 2, **characterised in that** said shared channels are the HS-SCCH downlink channels of a UMTS telecommunication system with HSDPA functionality.

4. Reception method according to claim 3, **characterised in that** said negative acknowledgement is sent back over the HS-DPCCH channel.
